(19) Europäisches Patentamt
European Patent Office
Office européen des brevets

(11) Publication number : 0 549 284 A1

# (12) EUROPEAN PATENT APPLICATION

(21) Application number : 92311606.5

(22) Date of filing : 18.12.92

(51) Int. Cl.$^5$ : B01D 53/34, A62D 3/00

(30) Priority : 27.12.91 JP 346243/91

(43) Date of publication of application :
30.06.93 Bulletin 93/26

(84) Designated Contracting States :
DE FR GB

(71) Applicant : Nippon Paint Co., Ltd.
2-1-2, Oyodokita, Kita-ku
Osaka-shi Osaka-fu (JP)

(72) Inventor : Yamauchi, Masahiro
2-3-601, Kannei-cho, Kita-ku
Osaka-shi, Osaka-fu (JP)
Inventor : Hayashida, Shigeo
4-8-1, Hoshidanishi
Katano-shi, Osaka-fu (JP)
Inventor : Mashio, Fujio
21-2, Matsugasakiimakaido-cho, Sakyo-ku
Kyoto-shi, Kyoto-fu (JP)

(74) Representative : Perry, Robert Edward
GILL JENNINGS & EVERY, Broadgate House,
7 Eldon Street
London EC2M 7LH (GB)

## (54) Process for treating halogenated hydrocarbon.

(57) The present invention provides a process for treating a halogenated hydrocarbon comprising a step of bringing the halogenated hydrocarbon into contact with a composition comprising an aprotic polar compound having a 5 or 6 membered ring and a nitrogen atom at an alpha-position of a carbonyl group and an alkoxide represented by the formula :

MOR

[wherein M is sodium or potassium and R is an alkyl group having 1 to 4 carbon atoms] to decompose the halogenated hydrocarbon.

EP 0 549 284 A1

## FIELD OF THE INVENTION

The present invention relates to a process for treating a halogenated hydrocarbon (e.g. Freon gas or hydrocarbon chloride, etc.).

## BACKGROUND OF THE INVENTION

Chlorinated hydrocarbons (e.g. methylene chloride, 1,1,1-trichloroethane, trichloroethylene, tetrachloroethylene and carbon tetrachloride) have been widely used as a dissolving agent of rubber and fats and oils, a cleaning agent for dry cleaning and precision machines and elements such as IC and the like. The chlorinated hydrocarbons have many advantages in low melting point, high solubility or detergency, non-combustibility and so on, but have some disadvantages in toxicity and carcinogenicity. Air pollution based on the chlorinated hydrocarbon is also one of significant problems and very strict regulations have been applied.

Further, fluorinated hydrocarbons [e.g. trichlorofluoromethane (Freon 11), 1,1,2-trichloro-1,2,2-trifluoroethane (Freon 113) and dichlorodifluoromethane (Freon 12)] have also been widely used for spraying, refrigerant, forming agent, solvent and cleaning agent for precision machines and elements. The fluorinated hydrocarbons have very low toxicity and non-combustibility. They also have high solubility with oils and organic materials and therefore exhibit very high detergency. Accordingly, the fluorinated hydrocarbon are very important in recent industries.

However, in 1974, Professor Lorland of California University warned that Freon gas which was exhausted into air reached to the stratosphere to cause the decomposition or destruction of the ozone layer, which results in adverse affect on human beings and ecosystem. It is strongly desired to inhibit the use of some Freon and to develop Freon substitutes. It also has been intensively studied not to exhaust it in the air.

The chlorinated hydrocarbons are normally recovered or removed by an active carbon adsorption method which, however, is insufficient because an adsorption rate is poor and a recovering process is complicated. Further, the treatment of the used active carbon is very difficult.

As the method for treating the chlorinated hydrocarbon, for example, there is described a method comprising a step of bringing a halogenated hydrocarbon into contact with a composition containing an aprotic polar solvent and a caustic alkali as an active ingredient in Japanese Patent Application No. 2-238539.

However, solubility of the caustic alkali to the aprotic polar solvent is poor and, therefore, the halogenated hydrocarbon absorbed to the aprotic polar solvent is contacted with the caustic alkali, insufficiently. Accordingly, the amount of the halogenated hydrocarbon to be decomposed is limited in this method. Thereby, it is difficult to decrease a concentration of the halogenated hydrocarbon in an exhaust gas to a predetermined level or less even if the amount of the caustic alkali to be contained in the composition is increased.

## OBJECTS OF THE INVENTION

That is, the main object of the present invention is to provide a process for treating a gas containing halogenated hydrocarbon, which can reduces a concentration of the halogenated hydrocarbon contained in the gas after the treatment to nearly zero.

This object as well as other objects and advantages will become apparent to those skilled in the art from the following description with reference to the accompanying drawings.

## BRIEF EXPLANATION OF DRAWINGS

Fig. 1 is a flow chart illustrating one preferred embodiment of the process of the present invention.

Fig. 2 is a schematic section illustrating an apparatus used in the cooling step of the process of the present invention.

Fig. 3 is one embodiment of an apparatus used in the first step (absorbing step) of the process of the present invention.

Fig. 4 is another embodiment of an apparatus used in the first step (absorbing step) of the process of the present invention.

Fig. 5 is still another embodiment of an apparatus used in the first step (absorbing step) of the process of the present invention.

## SUMMARY OF THE INVENTION

The present invention provides a process for treating a halogenated hydrocarbon comprising a step of

bringing the halogenated hydrocarbon into contact with a decomposing composition comprising an aprotic polar compound having a 5 or 6 membered ring and a nitrogen atom at an alpha-position of a carbonyl group and an alkoxide represented by the formula:

MOR

[wherein M is sodium or potassium and R is an alkyl group having 1 to 4 carbon atoms] to decompose the halogenated hydrocarbon.

DETAILED EXPLANATION OF THE INVENTION

A gas to be treated shown in Fig. 1 is a gas containing halogenated hydrocarbons. The gas is firstly sent to a first step via a cooling step, but may be directly sent to the first step without the cooling step. The cooling step is conducted for liquefying a portion of the halogenated hydrocarbons from the gas by cooling it, when the halogenated hydrocarbons are present at a high concentration. The cooling step is carried out with a simple condenser as shown in Fig. 2, but various types of condensers which are known to skilled in the art can be used.

It is preferred that the gas to be treated is introduced into the first step (absorbing step) via or without the cooling step. In the first step, the gas containing a halogenated hydrocarbon is contacted with a solution containing an aprotic polar compound (A) having a 5 or 6 membered ring and a nitrogen at an alpha-position of a carbonyl group. The aprotic polar compound (A) is represented by the formula:

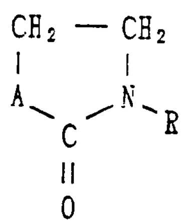

or

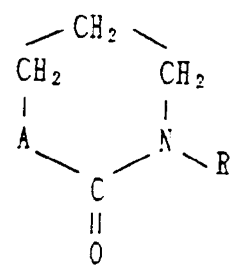

wherein A is a methylene group or -NR- in which R is an alkyl group having 1 to 3 atoms.

Typical examples of the aprotic polar compound (A) include 1,3-dimethyl-2-imidazolidinone (DMI), N-methyl-2-pyrrolidone (NMP), 1,3-dimethyl-2-oxohexahydropyrimidine (DMPU) and a mixture thereof. Preferred are those having a dipole moment of 3.7 to 4.8 D, especially 4.0 to 4.7 D, such as 1,3-dimethyl-2-imidazolidinone (DMI), N-methyl-2-pyrrolidone (NMP) and 1,3-dimethyl-2-oxohexahydropyrimidine (DMPU). When the dipole moment is outside the above range, absorption and desorption abilities of the halogenated hydrocarbon are deteriorated. Although the aprotic polar compounds (A) have been used as reaction solvents, it has been found by the present inventors that the aprotic polar compounds (A) are good absorption solvents for the halogenated hydrocarbons, such as hydrocarbon chloride or Freon gas (Japanese Patent Application No. 1-113300).

In the first step, a conventional gas-liquid contact process is employed. It is preferred that a contacting area of gas and liquid is made larger. Preferred means are including a bubble tower (Fig. 3), a plate column (Fig. 4) and a packed column (Fig. 5) and the like. A cooling or pressuring apparatus may be attached to the first step, because a large amount of the halogenated hydrocarbon is absorbed when the absorbing liquid is cooled or the gas is pressured.

A solution, in which the halogenated hydrocarbon has been absorbed in the first step, is optionally sent to a recovering step which is shown below the first step in Fig. 1. The recovering step is carried out by distillation, evaporation or introduction of the absorbing liquid at high recovery or high purity. The evaporation can be conducted using an evaporation column. The aprotic polar compound (A) regenerated in the recovering step can be used again as an absorbent.

The exhaust gas, in which a large amount of halogenated hydrocarbon has been absorbed in the first step, is then sent to the second step (decomposing step). The second step is carried out by bringing the gas containing the halogenated hydrocarbon into contact with a mixed solution of the above aprotic polar compound (A) and an alkoxide or a composition optionally containing a caustic alkali, water, and alcohol used as a solvent for the alkoxide and the caustic alkali in the mixed solution.

The aprotic polar compound (A) contained in the decomposing composition has an action of absorbing the halogenated hydrocarbon efficiently.

The alkoxide contained in the decomposing composition is represented by the formula:

MOR

wherein M is sodium or potassium and R is an alkyl group having 1 to 4 carbon atoms. Examples thereof include sodium methoxide, potassium methoxide, potassium t-butoxide and a mixture thereof. When the number of carbon atoms of the alkyl group of the alkoxide exceeds 4, a decomposition efficiency is deteriorated, and it is not preferred.

The alkoxide has high solubility to alcohol in comparison with the caustic alkali. Accordingly, the concentration of the alkoxide in alcohol can be enhanced. As a result, the frequency of contact between the halogenated hydrocarbon contained in the aprotic polar solvent and the alkoxide is increased, whereby, the decomposing decomposition of the halogenated hydrocarbon is accelerated.

Examples of the caustic alkali which is optionally contained in the decomposing composition include caustic soda, caustic potash, calcium hydroxide and a mixture thereof.

The decomposing composition of the present invention may additionally contain an aprotic polar compound having a sulfinyl or sulfonyl group, other than the aprotic polar compound (A) having a 5 or 6 membered ring and a nitrogen atom at an alpha-position of a carbonyl group. The other aprotic polar compound is herein referred to as "aprotic polar compound (B)". The aprotic polar compound (B) may be selected from the group consisting of $R^1$-S(=O)-$R^2$, $R^3$-S(=O)$_2$-$R^4$, (in which $R^1$ to $R^4$ respectively show an alkyl group having 1 to 4 carbon atoms, provided that a combination of $R^1$ and $R^2$ or a combination of $R^3$ and $R^4$ may form a cyclic ring having 2 to 8 carbon atoms) and a mixture thereof. Preferred are dimethyl sulfoxide and sulfolane. An amount of the aprotic polar compound (B) may be varied, but generally less than 80 volume %, preferably 10 to 70 volume %, based on the volume of the aprotic polar compound (A). When the amount of the aprotic polar compound (B) exceeds 80 volume %, efficiency of decomposition will decrease because outlet gas concentration is initially high.

The decomposing composition may optionally contain water. Water has an action of increasing the amount of the alkali to be dissolved in the aprotic polar solvent. Water may be contained in an amount of less than 40 volume %, preferably less than 20 volume %, based on the volume of the aprotic polar compound (B). When the amount of water exceeds 40 volume %, solubility of the halogenated hydrocarbon to the solvent is lowered, which results in deterioration of the decomposition efficiency. When water is contained in the composition, it is more effective to add water together with an anti-alkali dispersant such as a fluorine surfactant [e.g. "Surflon" manufactured by Asahi Glass Co.].

The second step (decomposing step) is also conducted using the same gas-liquid contacting apparatus as is explained in the first step. The treatment can be conducted at a temperature between an ambient temperature and a melting point of the aprotic polar compound (A) to be used, preferably 50 to 150°C. The treatment can also be conducted at higher temperature by optionally pressurizing. However, when the decomposing step is conducted at a temperature of more than 150°C, efficiency is improved, but fly of the solvent becomes severe.

In the second step, the decomposition of the halogenated hydrocarbon is conducted more effectively by bringing the gas containing the halogenated hydrocarbon into contact with the decomposing composition while exposing to ultraviolet light, using a light-transmission type decomposing apparatus having a glass window.

The gas, which is exhausted from the second step (decomposing step), little contains halogenated hydrocarbon, but if necessary halogenated hydrocarbon may be further removed by another method, such as plasma decomposing method, contact decomposing method and the like.

In the conventional process for treating a gas containing the halogenated hydrocarbon, it is difficult to maintain a concentration of the halogenated hydrocarbon contained in the treated gas at low level, and the concentration increases with time. On the contrary, in the second step (decomposing step) in the present invention, the concentration of halogenated hydrocarbon can be stably maintained at low level with time, because solubility to the solvent is large in comparison with the case that the caustic alkali is used and reactivity with the halogenated hydrocarbon is large.

According to the present invention, there is provided a process for treating a gas containing a halogenated hydrocarbon, which can reduces a concentration of the halogenated hydrocarbon contained in the gas after the treatment to nearly zero.

## EXAMPLES

The following Examples further illustrate the present invention in detail but are not to be construed to limit the scope thereof. All "parts" and "%'s" hereinafter are by weight unless otherwise stated.

Example 1

A three neck distillation flask was charged with 400 ml of DMI and 30 ml of a 28 % solution of sodium methylate in methanol. Air containing about 2000 ppm of Freon 113 was bubbled into the flask at a flow rate of 1.0 l/minute with stirring at 100°C. By using a microsenser gas analizer ["M-200" manufactured by Nippon Tylan Co.], a concentration of Freon 113 in exhausted air was measured with time to calculate a decomposition rate.

Until 120 minutes have elapsed since the beginning of bubbling, a concentration of Freon 113 was less than 100 ppm. Accordingly, a decomposition rate of Freon 113 during this time of period was 96.8 %.

After 160 minutes have elapsed since the beginning of bubbling, a concentration of Freon 113 began to increase. A concentration of Freon 113 when 240 minutes have elapsed since the beginning of bubbling was about 1200 ppm, and a total decomposition rate during a lapse time of 0 to 240 minutes was 82.6 %.

Example 2

A three neck distillation flask was charged with 400 ml of DMI, 30 ml of a 28 % solution of sodium methylate in methanol and 30 g of a powdered caustic alkali. Air containing about 3000 ppm of Freon 113 was bubbled into the flask at a flow rate of 1.0 l/minute with stirring at 100°C. By using a microsenser gas analizer ["M-200" manufactured by Nippon Tylan Co.], a concentration of Freon 113 in exhausted air was measured with time to calculate a decomposition rate.

Until 120 minutes have elapsed after the beginning of bubbling, a concentration of Freon 113 was less than 70 ppm. Accordingly, a decomposition rate of Freon 113 during this period of time was 99.0 %.

After 160 minutes have elapsed since the beginning of bubbling, a concentration of Freon 113 began to increase. A concentration of Freon 113 when 240 minutes have elapsed since the beginning of bubbling was about 550 ppm, and a total decomposition rate during a time lapse of 0 to 240 minutes was 5.6 %.

Example 3

A three neck distillation flask was charged with 200 ml of DMI, 200 ml of sulfolane and 30 ml of a 28 % solution of sodium methylate in methanol. Air containing about 1000 ppm of Freon 113 was bubbled into the flask at a flow rate of 1.0 l/minute with stirring at 100°C. By using a microsenser gas analizer ["M-200" manufactured by Nippon Tylan Co.], a concentration of Freon 113 in exhausted air was measured with time to calculate a decomposition rate.

Until 120 minutes have elapsed since the beginning of bubbling, a concentration of Freon 113 was less than 400 ppm. Accordingly, a decomposition rate of Freon 113 during this period of time was 65.0 %.

Example 4

A three neck distillation flask was charged with 200 ml of DMI, 200 ml of DMSO and 300 ml of a 28 % solution of sodium methylate in methanol. Air containing about 3000 ppm of Freon 113 was bubbled into the flask at a flow rate of 1.0 l/minute with stirring at 100°C. By using a microsenser gas analizer ["M-200" manufactured by Nippon Tylan Co.], a concentration of Freon 113 in exhausted air was measured with time to calculate a decomposition rate.

Until 300 minutes have elapsed since the beginning of bubbling, a concentration of Freon 113 was less than 100 ppm. Accordingly, a decomposition rate of Freon 113 during this period of time was 98.3 %.

Example 5

A container was charged with 3000 ml of DMI and 300 ml of a 28 % solution of sodium methylate in methanol. Air containing about 1000 ppm of Freon 113 was bubbled into the flask at a flow rate of 10.0 l/minute with stirring at 100°C. By using a microsenser gas analizer ["M-200" manufactured by Nippon Tylan Co.], a concentration of Freon 113 in exhausted air was measured with time to calculate a decomposition rate.

Until 120 minutes have elapsed since the beginning of bubbling, a concentration of Freon 113 was less than 200 ppm. Accordingly, a decomposition rate of Freon 113 during this period of time was 81.6 %.

Example 6

According to the same manner as that described in Example 1 except that a concentration of Freon 113 contained in air was about 1500 ppm, a concentration of Freon 113 in exhausted air was measured with time

to calculate a decomposition rate. The results are shown in Table 1.

Until 120 minutes have elapsed since the beginning of bubbling, a concentration of Freon 113 was less than 100 ppm. Accordingly, a decomposition rate of Freon 113 during this period of time was 96.8 %.

After 150 minutes have elapsed since the beginning of bubbling, a concentration of Freon 113 began to increase. A concentration of Freon 113 when 240 minutes have elapsed since the beginning of bubbling was 1176 ppm, and a total decomposition rate during a lapse time of 0 to 240 minutes was 82.5 %.

Example 7

According to the same manner as that described in Example 1 except that a concentration of Freon 113 contained in air was about 3,000 ppm and 30 g of KOH was further incorporated into the composition, a concentration of Freon 113 in exhausted air was measured with time to calculate a decomposition rate. The results are shown in Table 1.

Until 150 minutes have elapsed since the beginning of bubbling, a concentration of Freon 113 was less than 100 ppm. A decomposition rate of Freon 113 during a lapse time of 0 to 120 minutes was 98.9 %.

After 180 minutes have elapsed since the beginning of bubbling, a concentration of Freon 113 began to increase. A concentration of Freon 113 when 240 minutes have lapsed since the beginning of bubbling was 512 ppm, and a total decomposition rate during a lapse time of 0 to 240 minutes was 95.5 %.

Example 8

According to the same manner as that described in Example 1 except that potassium t-butoxide was used in place of a 28 % solution of methylate in methanol, a concentration of Freon 113 was measured with time to calculate a decomposition rate. The results are shown in Table 1.

Until 60 minutes has elapsed since the beginning of bubbling, a concentration of Freon 113 was substantially 0. Accordingly, a decomposition rate of Freon 113 during a lapse time of 0 to 120 minutes was 98.9 %.

After 90 minutes has elapsed since the beginning of bubbling, a concentration of Freon 113 began to increase. A concentration of Freon 113 when 240 minutes have lapsed since the beginning of bubbling was 318 ppm, and a total decomposition rate during a lapse time of 0 to 240 minutes was 88.9 %.

Example 9

According to the same manner as that described in Example 1 except that a concentration of Freon 113 contained in air was about 1000 ppm and 200 ml of DMSO, 30 g of KOH and 40 g of water were further incorporated into the composition, a concentration of Freon 113 in exhausted air was measured with time to calculate a decomposition rate. The results are shown in Table 1.

During more than 5 hours since the beginning of bubbling, a concentration of Freon 113 was less than 150 ppm. Until 120 minutes have elapsed after the beginning of bubbling, a decomposition rate was 84.5 %. A concentration of Freon 113 when 240 minutes have elapsed since the beginning of bubbling was 64 ppm, and a total decomposition rate during a lapse time of 0 to 240 minutes was 86.8 %.

Example 10

According to the same manner as that described in Example 1 except that tetrachloroethylene was used in place of Freon 113 and a concentration of tetrachloroethylene contained in air was about 5000 ppm, a concentration of tetrachloroethylene in exhausted air was measured with time to calculate a decomposition rate. The results are shown in Table 1.

During more than 4 hours since the beginning of bubbling, a concentration of tetrachloroethylene was less than 100 ppm. Until 120 minutes have elapsed since the beginning of bubbling, a decomposition rate of tetrachloroethylene was 99.2 %. A concentration of tetrachloroethylene when 240 minutes have elapsed after the beginning of bubbling was 80 ppm, and a total decomposition rate during a lapse time of 0 to 240 minutes was 98.9 %.

Comparative Example 1

According to the same manner as that described in Example 1 except that 30 g of KOH was used in place of a 28 % solution of sodium methylate in methanol and a concentration of Freon 113 contained in air was about 1600 ppm, a concentration of Freon 113 in exhausted air was measured with time to calculate a decomposition

rate. The results are shown in Table 1.

After 30 minutes have elapsed since the beginning of bubbling, a concentration of Freon 113 began to increase. Until 120 minutes have elapsed after the beginning of bubbling, a decomposition rate of Freon 113 was 85.0 %. A concentration of Freon 113 when 240 minutes have elapsed since the beginning of bubbling was 750 ppm, and a total decomposition rate during this period of time was 73.5 %.

Table 1

| | Example 6 | Example 7 | Example 8 | Example 9 | Example 10 | Comp. Example 1 |
|---|---|---|---|---|---|---|
| Solvent | | | | | | |
| DMI[1] (ml) | 400 | 400 | 400 | 200 | 400 | 400 |
| DMSO[2] (ml) | 0 | 0 | 0 | 200 | 0 | 0 |
| Alkali | | | | | | |
| KOH (g) | 0 | 30 | 0 | 30 | 0 | 30 |
| Sodium Methylate (28 % methanol solution) (ml) | 30 | 30 | 0 | 30 | 30 | 0 |
| K-t-butoxide (g) | 0 | 0 | 10 | 0 | 0 | 0 |
| Water (g) | 0 | 0 | 0 | 40 | 0 | 0 |
| Gas to be treated | R113[3] | R113[3] | R113[3] | R113[3] | 4CE[4] | R113[3] |
| Concentration of inlet gas (ppm) | ca.1500 | ca.3000 | ca.2000 | ca.1000 | ca.5000 | ca.1600 |

1) DMI: 1,3-dimethyl-2-imidazolidinone

2) DMSO: dimethylsulfoxide

3) R113: Freon 113

4) 4CE: tetrachloroethylene

Table 1 (continued)

| | Example 6 | Example 7 | Example 8 | Example 9 | Example 10 | Example 1 |
|---|---|---|---|---|---|---|
| Concentration of outlet gas (ppm) | | | | | | |
| 0.5 hours | 65 | 25 | 0 | 126 | 31 | 178 |
| 1.0 hours | 66 | 20 | 0 | 163 | 36 | 210 |
| 1.5 hours | 49 | 39 | 423 | 124 | 46 | 340 |
| 2.0 hours | 50 | 70 | 621 | 120 | 75 | 450 |
| 2.5 hours | 100 | 48 | 363 | 149 | 60 | 467 |
| 3.0 hours | 440 | 232 | 396 | 137 | 49 | 599 |
| 3.5 hours | 989 | 363 | 337 | 85 | 77 | 677 |
| 4.0 hours | 1176 | 512 | 318 | 64 | 80 | 750 |
| Results | | | | | | |
| Period of time wherein a concentration of an exhaust gas is constant (hours) | 2.5 | 3.0 | 1.0 | >5.0 | >4.0 | 0.0 |
| Decomposition rate during a lapse time of 0 to 2 hours | 96.8 | 98.9 | 89.9 | 84.5 | 99.2 | 85.0 |
| Decomposition rate during a lapse time of 0 to 4 hours | 82.5 | 95.5 | 88.9 | 86.8 | 98.9 | 73.5 |

Example 11

According to the same manner as that described in Example 1 except that 1,1,1-trichloroethane was used in place of Freon 113 and a concentration of 1,1,1-trichloroethane contained in air is 1500 ppm, a concentration

of 1,1,1-trichloroethane in exhausted air was measured with time to calculate a decomposition rate. A concentration of 1,1,1-trichloroethane when 5 hours have lapsed since the beginning of bubbling could not detected by a gas chromatography.

## Claims

1. A process for treating a halogenated hydrocarbon comprising a step of bringing the halogenated hydrocarbon into contact with a decomposing composition comprising an aprotic polar compound having a 5 or 6 membered ring and a nitrogen atom at an alpha-position of a carbonyl group and an alkoxide represented by the formula:

   MOR

   [wherein M is sodium or potassium and R is an alkyl group having 1 to 4 carbon atoms]
   to decompose the halogenated hydrocarbon.

2. The process according to Claim 1 wherein said aprotic polar compound is represented by the formula:

   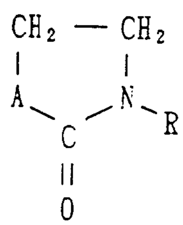

   or

   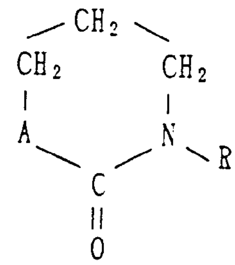

   wherein A is a methylene group or -NR- in which R is an alkyl group having 1 to 3 atoms.

3. The process according to Claim 1 wherein said aprotic polar compound is selected from the group consisting of 1,3-dimethyl-2-imidazolidinone (DMI), N-methyl-2-pyrrolidone (NMP), 1,3-dimethyl-2-oxohexahydropyrimidine (DMPU) and a mixture thereof.

4. The process according to Claim 1 wherein said aprotic polar compound has a dipole moment of 3.7 to 4.8 D.

5. The process according to Claim 1 wherein said contacting is conducted by a bubble tower, a plate column or a packed column.

6. The process according to Claim 1 wherein said alkoxide is selected from the group consisting of sodium methoxide, potassium methoxide, potassium t-butoxide and a mixture thereof.

7. The process according to Claim 1 wherein said decomposing composition additionally contains an aprotic polar compound having a sulfinyl or sulfonyl group, other than said aprotic polar compound having a 5 or 6 membered ring and a nitrogen atom at an alpha-position of a carbonyl group.

8. The process according to Claim 7 wherein said aprotic polar compound having a sulfone or sulfoxide group is selected from the group consisting of $R^1$-S(=O)-$R^2$, $R^3$-S(=O)$_2$-$R^4$, (in which $R^1$ to $^4$ respectively show an alkyl group having 1 to 4 carbon atoms, provided that a combination of $R^1$ and $R^2$ or a combination of $R^3$ and $R^4$ may form a cyclic ring having 2 to 8 carbon atoms, and a mixture thereof.

9. The process according to Claim 8 wherein said $R^1$-S(=O)-$R^2$ is dimethyl sulfoxide.

10. The process according to Claim 8 wherein said $R^3$-S(=O)$_2$-$R^4$ is sulfolane.

11. The process according to Claim 1 wherein said decomposing composition further contains water.

12. The process according to Claim 7 wherein said water is contained in an amount of less than 40 volume %, based on the volume of said aprotic polar compound.

Fig. 1

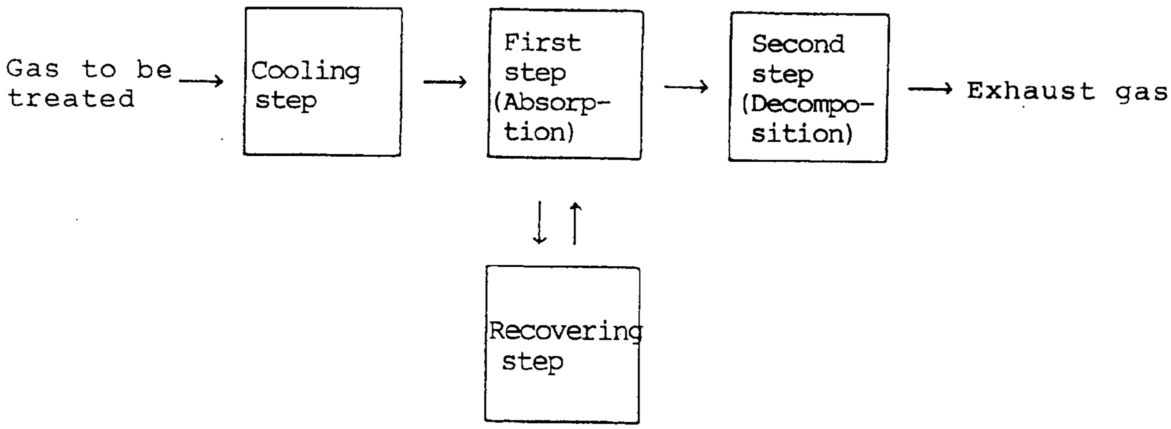
Gas to be treated
Cooling step
First step (Absorption)
Second step (Decomposition)
Exhaust gas
Recovering step

Fig. 2

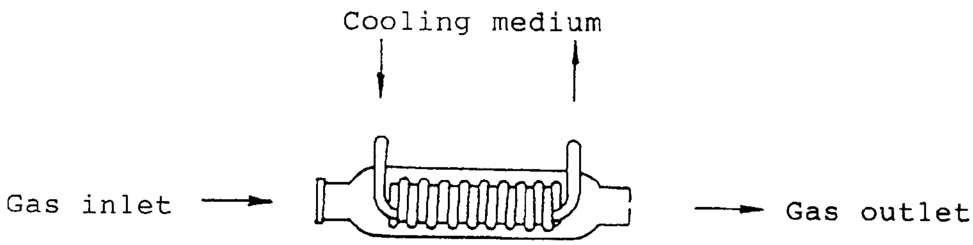
Cooling medium
Gas inlet
Gas outlet

Fig. 3

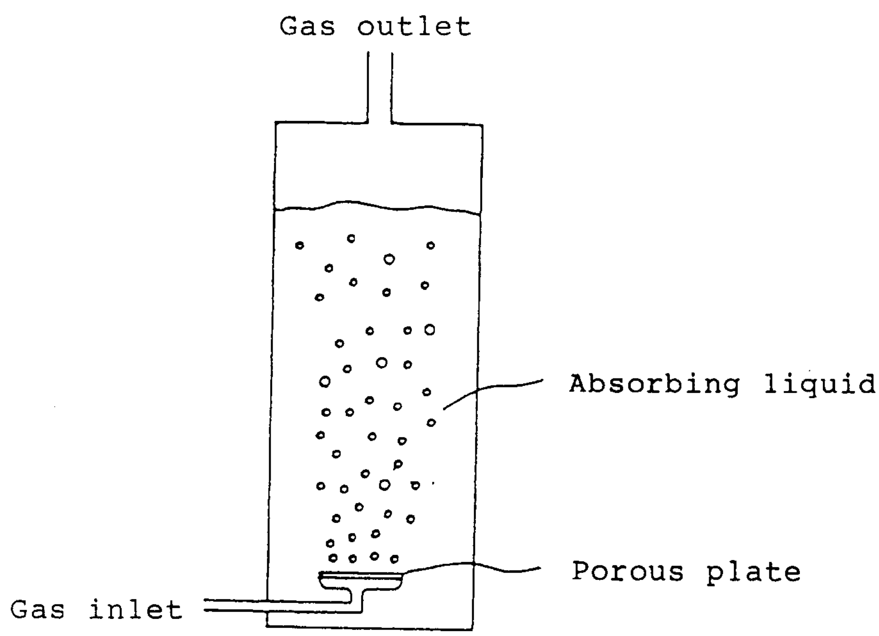

Fig. 4

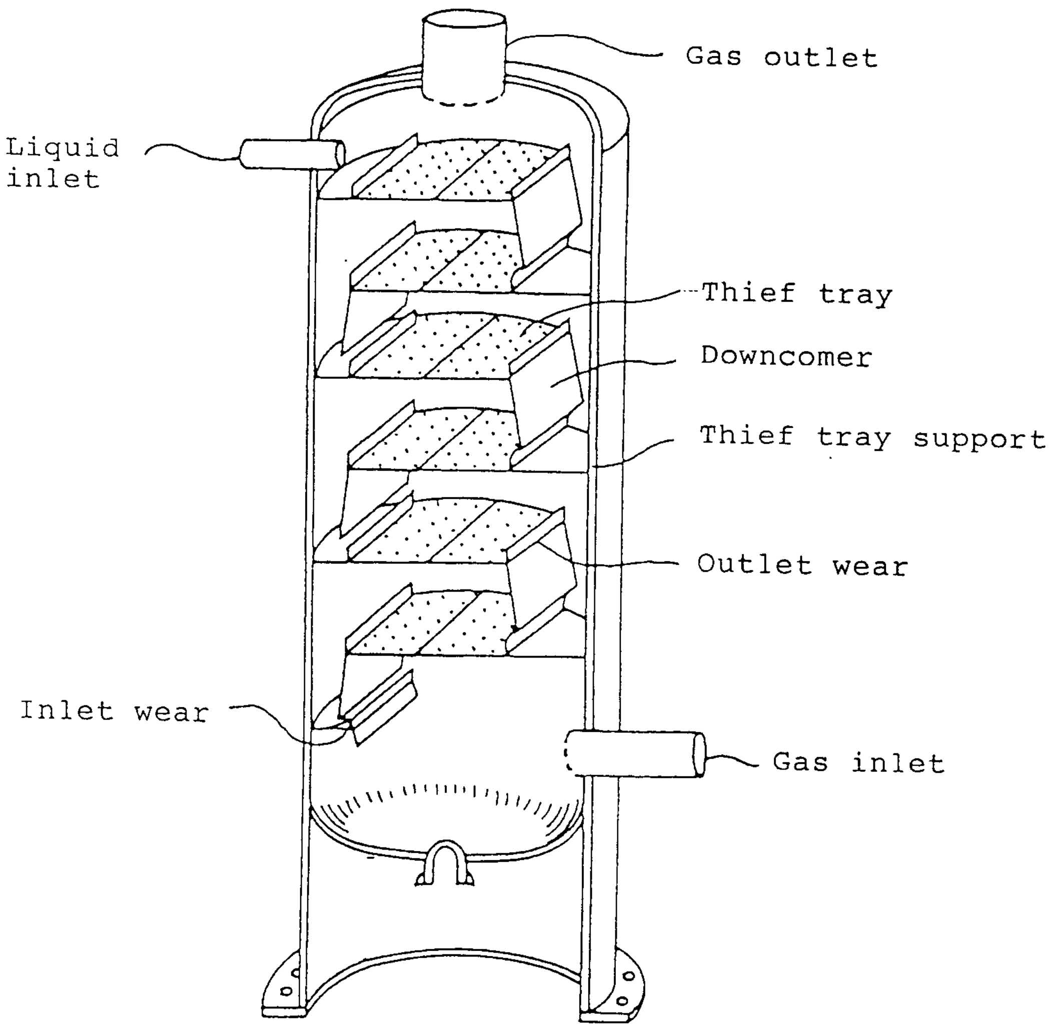
Gas outlet
Liquid inlet
Thief tray
Downcomer
Thief tray support
Outlet wear
Inlet wear
Gas inlet

Fig. 5

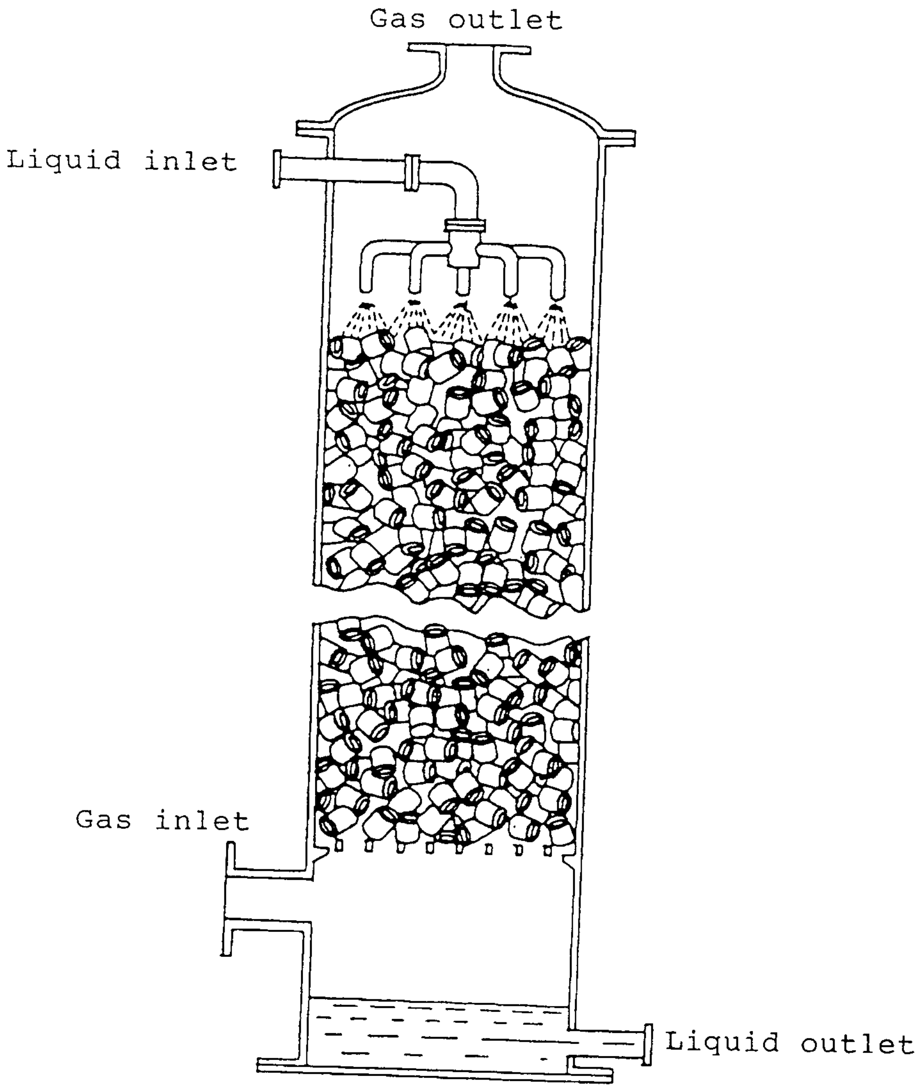

European Patent Office

# EUROPEAN SEARCH REPORT

Application Number

EP 92 31 1606

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | WO-A-9 109 808 (TEXAS A&M UNIV. SYSTEM)<br>* page 10, line 25 - page 11, line 8; claims 1,6-8,27-31 * | 1-4,6-10 | B01D53/34<br>A62D3/00 |
| X | WO-A-8 501 955 (NIAGARA MOHAWK POWER CO.)<br>* page 6, paragraph 4 - page 8, paragraph 4; claims 1-8 * | 1-4,6-9 | |
| P,A, D | EP-A-0 474 500 (NIPPON PAINT CO.)<br>11 March 1992<br>* page 4, line 11 - line 13; claims 1-10; figures 1-6 * | 1-5,11, 12 | |
| A | EP-A-0 107 404 (THE FRANKLIN INSTITUTE)<br>* page 7, line 17 - page 10, line 33 *<br>* page 11, line 7 - line 24 * | 1-4,7-9 | |
| | | | TECHNICAL FIELDS SEARCHED (Int. Cl.5 ) |
| | | | B01D<br>A62D |

The present search report has been drawn up for all claims

| Place of search | Date of completion of the search | Examiner |
|---|---|---|
| THE HAGUE | 31 MARCH 1993 | EIJKENBOOM T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)